# EUROPEAN PATENT APPLICATION

(11) **EP 1 671 987 A1**
(43) Date of publication of application: **21.06.2006**
(21) Application number: 04078421.7
(22) Date of filing: 16.12.2004
(51) Int. Cl.: C08G 12/42

(54) **Process for the preparation of a modified amino-formaldehyde resin; modified amino-formaldehyde resin thus obtainable, and use thereof**

(71) Applicant: DSM IP Assets B.V., 6411 TE Heerlen (NL)
(72) Inventor: De Keijzer, Augustinus Eugene Henk, 6133 BP Sittard (NL); De Haas, Jacob Leendert, 6137 JP Sittard (NL); Van Dijck, Michael Alphonsus Cornelis Johannes, 3960 Bree-Opitter (BE); Van Benthem, Rudolfus Antonius Theodorus Maria, 6141 BR Limbricht (NL); Nusselder, Jan Jacob Hendrik, 6174 RE Sweikhuizen (NL)
(74) Representative: Koster, Nico

(57) **Abstract**

The invention relates to a process for the preparation of a modified amino-formaldehyde resin, comprising:
a) a mixing step, in which a liquid phase, an amino-formaldehyde resin and free formaldehyde are brought together to form a mixture, whereby the amino-formaldehyde resin has a molar formaldehyde to (NH₂)₂ ratio (F/(NH₂)₂ ratio) lying between 0.5 and 3, and whereby the overall molar F/(NH₂)₂ ratio in the mixture is higher than the molar F/(NH₂)₂ ratio of the amino-formaldehyde resin and lies between 2 and 6;
b) an F-binding step, in which the mixture is brought to conditions whereby at least part of the free formaldehyde reacts with the amino-formaldehyde resin to form a formaldehyde-enriched amino-formaldehyde resin;
c) an alkylation step, in which an alcohol and an acid having a pKa lower than 6 are added to the mixture, the mixture then being brought to conditions whereby at least part of the alcohol reacts with the formaldehyde-enriched amino-formaldehyde resin to form the modified amino-formaldehyde resin,
whereby steps a) and b) may be executed either consecutively or simultaneously.

The invention further relates to a modified amino-formaldehyde resin, as obtainable by the process according to the invention, to the use thereof in coating compositions, in particular powder coating compositions, and to cured coatings so obtainable.

## Description

The invention relates to a process for the preparation of a modified amino-formaldehyde resin. Furthermore, the invention relates to a modified amino-formaldehyde resin. Moreover, the invention relates to the use of the modified amino-formaldehyde resin as cross-linker in coatings, in particular powder coatings.

It is well-known to prepare hexa(alkoxymethyl)melamines such as hexa(methoxymethyl)melamine (HMMM) or hexa(butoxymethyl)melamine (HBMM), and to use HMMM or HBMM or mixtures thereof as a cross-linking agent in coatings such as for polyester powders coatings. The disadvantage associated with the use of HMMM and/or HBMM, however, is that they have a low glass transition temperature (T_{g}) of about -60°C. When HMMM and/or HBMM are used in an effective amount - typically 10 to 20 wt.% of a coating composition - the T_{g} of an HMMM- or HBMM- containing powder coating composition is lowered to undesirably low values, lying often below room temperature.

It is the objective of the present invention to reduce or even eliminate the aforementioned disadvantage.

The objective is achieved by a modified amino-formaldehyde resin, obtainable by a process for the preparation of a modified amino-formaldehyde resin comprising:
a) a mixing step, in which a liquid phase, an amino-formaldehyde resin and free formaldehyde are brought together to form a mixture, whereby the amino-formaldehyde resin has a molar formaldehyde to (NH₂)₂ ratio (F/(NH₂)₂ ratio) lying between 0.5 and 3, and whereby the overall molar F/(NH₂)₂ ratio in the mixture is higher than the molar F/(NH₂)₂ ratio of the amino-formaldehyde resin and lies between 2 and 6;
b) an F-binding step, in which the mixture is brought to conditions whereby at least part of the free formaldehyde reacts with the amino-formaldehyde resin to form a formaldehyde-enriched amino-formaldehyde resin;
c) an alkylation step, in which an alcohol and an acid having a pKa lower than 6 are added to the mixture, the mixture then being brought to conditions whereby at least part of the alcohol reacts with the formaldehyde-enriched amino-formaldehyde resin to form the modified amino-formaldehyde resin,
whereby steps a) and b) may be executed either consecutively or simultaneously.

The advantage of the modified amino-formaldehyde resin according to the invention is that it can have a higher or even substantially higher T_{g} than HMMM or HBMM. Depending on the T_{g}, the modified amino-formaldehyde resin according to the invention may at room temperature still be a liquid or it may be a solid. The modified amino-formaldehyde resin according to the invention is suitable as cross-linking agent in coating compositions, in particular in powder coating compositions.

The modified amino-formaldehyde resin according to the invention is obtainable by a process. Said process comprises a mixing step a) in which a liquid phase, an amino-formaldehyde resin and free formaldehyde are brought together to form a mixture.

As liquid phase, any liquid compound or mixture of liquid compounds is suitable provided that an amino-formaldehyde resin and free formaldehyde can dissolve in it, and that it can be a liquid under the conditions where steps b) and c) are performed. It may be helpful or necessary to execute the process according to the invention under increased pressure so as to prevent evaporation of the liquid phase. Examples of suitable liquid phases are water, various alcohols, or mixtures of water and one or more alcohols. Preferably the liquid phase comprises or even consists essentially of water, isopropanol, butanol or mixtures thereof.

In the process according to the invention, the liquid phase is brought together with an amino-formaldehyde resin, whereby the amino-formaldehyde resin has a molar formaldehyde to (NH₂)₂ ratio (F/(NH₂)₂ ratio) lying between 0.5 and 3. Such resins are known per se from for example Kunststoff Handbuch, Vol. 10 Duroplaste (Becker, Braun; Carl Hanser Verlag 1988), where in chapter 1.2.3 the preparation of melamine resins is disclosed. Examples of widely- used amino-formaldehyde resins are melamine-formaldehyde resins, urea-formaldehyde resins, or melamine-urea-formaldehyde resins.

The molar F/(NH₂)₂ ratio of the amino-formaldehyde resin should be at least 0.5, so as to enable proper resin formation. Preferably, the molar F/(NH₂)₂ ratio is preferably at least so high that essentially all amino compounds are bridged to at least one other amino compound. More preferably, the molar F/(NH₂)₂ ratio of the amino-formaldehyde resin is at least 0.7 or 0.9, most preferably at least 1.0. On the other hand, the molar F/(NH₂)₂ ratio of the amino-formaldehyde resin should remain below 3 so that significant HMMM formation during the process according to the invention is avoided; preferably, the molar F/(NH₂)₂ ratio lies below 2.8 or 2.6, more preferably below 2.4 or 2.2, most preferably below 2.0 or 1.8. An amino compound is herein defined as a compound having at least one -NHR or -NH₂ group, attached to an electron-withdrawing atom or group or to a carbon atom that itself is attached to an electron-withdrawing atom or group. Examples of electron-withdrawing atoms are oxygen, nitrogen, and sulphur. R can in principle be any organic group. Examples of suitable amino compounds are urea, guanidine, triazines such as melamine, or mixtures of these amino compounds.

If the amino-formaldehyde resin is a melamine-formaldedhyde (MF) or melamine-urea-formaldehyde (MUF) resin and the liquid phase with which it will be brought into contact with in step a) is water, it is preferred that the resin has reacted at least to such a molecular weight that the cloud point at 0°C has been reached. As is known, the cloud point of a MF or MUF resin at a temperature T_{c} is reached during its preparation when a drop of resin, added to a large amount of water at T_{c}°C, no longer dissolves but shows turbidity. On the other hand, it is preferred that the resin has not reacted beyond the cloud point at the boiling temperature of the mixture, i.e. when a dispersion of solid resin particles in the mixture is formed. This boiling temperature will be not far removed from 100°C when working at atmospheric pressure, or it may be significantly higher than that if the process according to the invention is carried out at elevated pressure.

If the amino-formaldehyde resin is a melamine-formaldedhyde (MF) or melamine-urea-formaldehyde (MUF) resin and the liquid phase with which it will be brought into contact with in step a) is not water, then a different type of cloud point measurement could be implemented: instead of adding a drop of resin to water, a drop of resin is added to white spirit (CAS number 8052-41-3). A similar evaluation criterion applies: the white spirit cloud point at T_{c} is reached when a drop of resin, added to a large amount of white spirit at T_{c}°C, no longer dissolves but shows turbidity. It is preferred that the resin has reacted at least to such a molecular weight that the white spirit cloud point at T_{c} = 0°C has been reached, but not beyond the cloud point at T_{c} = boiling point of the white spirit at the prevailing pressure. The boiling point of white spirit lies - as is known - between 130°C and 230°C at atmospheric pressure.

The resin may be an essentially dry material or it may be a solution or dispersion, e.g. in aqueous phase, when it is brought into contact with the liquid phase.

In the process according to the invention, the liquid phase and the amino-formaldehyde resin are brought into contact with each other and with free formaldehyde to form a mixture. Free formaldehyde means herein either formaldehyde itself or a compound that can release formaldehyde at the conditions prevailing in step a) or step b), such as for example paraformaldehyde or trioxane. The free formaldehyde can be brought into the mixture as such, or in the form of a solution. In practice, aqueous solutions of formaldehyde are very commonly used and are suitable for use in the process according to the invention. As a result of the free formaldehyde addition, the overall molar F/(NH₂)₂ ratio of the mixture should increase. In a preferred embodiment according to the invention, no amino compound is added in this step or in any subsequent step of the process according to the invention. Thus, the molar F/(NH₂)₂ ratio of the mixture will be higher than the molar F/(NH₂)₂ ratio of the amino-formaldhyde resin. According to the invention, an amount of free formaldehyde should be added in such a way that the overall molar F/(NH₂)₂ ratio of the mixture lies between 2 and 6. Preferably, the overall molar F/(NH₂)₂ ratio of the mixture is increased in the mixing step to at least 2.3, 2.6, 2.9, 3.2, or 3.5. Preferably, the overall molar F/(NH₂)₂ ratio of the mixture is increased in the mixing step to at most 5.5, 5.0, 4.5, 4.0, or 3.8. In a preferred embodiment, the amount of free formaldehyde as added to the mixture is such that the overall molar F/(NH₂)₂ ratio of the mixture is at least 0.2 or 0.4 higher than that of the amino-formaldehyde resin. More preferably, the said ratio increases by at least 0.8 or 1.0; most preferably, the said ratio increases by at least 1.5, 0, 2.5 or 3, or even by at least 3.5, 4.0, 4.5 or 5.0. It was found that a higher increase of the overall molar F/(NH₂)₂ ratio of the mixture leads to further improved properties of the end product - i.e. the modified amino-formaldehyde resin - in particular relating to its efficiency as cross-linking agent. The amount of free formaldehyde is preferably such that at least 40 mol%, more preferably at least 50, 60, 70, 80, 90 mol%, or even essentially all -NH functionalities in the -NHR or -NH₂ groups as present in the amino-formaldehyde resin can be converted into -N-CH₂-OH groups in the F-binding step b) to be discussed below.

In F-binding step b) of the process according to the invention, the mixture is brought to conditions whereby at least part of the free formaldehyde reacts with the amino-formaldehyde resin to form a formaldehyde-enriched amino-formaldehyde resin. It was found that the said reaction will in many cases occur spontaneously; this is typically at least the case if the mixture comprises water as the liquid phase and the temperature lies between room temperature and the boiling point of the mixture. In such a case, and representing a preferred embodiment of the process according to the invention, steps a) and b) according to the invention will occur simultaneously or almost simultaneously. Should the F-binding step b) not occur spontaneously, the skilled person can find suitable conditions for implementing this step by varying temperature, pH, and pressure: a higher temperature (possibly under increased pressure in order to prevent boiling) will speed up the F-binding step, as well as a (further) removal of the pH from neutral.

In alkylation step c) of the process according to the invention, the mixture comprising the formaldehyde-enriched amino-formaldehyde resin is brought into contact with an alcohol and an acid having a pKa lower than 6, the mixture then being brought to conditions whereby at least part of the alcohol reacts with the formaldehyde-enriched amino-formaldehyde resin. With this reaction, the modified amino-formaldehyde resin according to the invention is formed.

The mixture is brought into contact with an alcohol. Preferably, an alcohol or mixture thereof is chosen so that is at least partly miscible with the liquid phase. More preferably, the alcohol or mixture of alcohols is chosen such that it is miscible with the liquid phase in all ratios. In a preferred embodiment of the process according to the invention, water is the liquid phase and isopropanol is the alcohol. In an alternative embodiment, the liquid phase already comprises the alcohol as needed in alkylation step c), in which case it may not benecessary anymore to add any alcohol during this step. Preferably within this embodiment, the liquid phase is a water/isopropanol mixture and no alcohol is added to the mixture. Examples of other suitable alcohols that are to be added in step c) and/or are comprised within the liquid phase are: isopropanol, n-propanol, isobutanol, 2-butanol, and ethanol.

In alkylation step c) of the process according to the invention, an acid having a pKa lower than 6 is added to the mixture. It was found that an acidic environment is often required in order to enable the formation of the modified amino-aldehyde resin from the formaldehyde-enriched amino-formaldehyde resin. Preferably, the acid to be added has a pKa of at most 5 or 4; more preferably, the acid to be added has a pKa of at most 3 or 2. Hydrogen Chloride (HCl) is an example of a suitable acid. When adding the acid, it is preferred to add the acid in such an amount that a pH between 0 and 7 is reached, preferably between 1 and 6 or between 1.5 and 5.5. In general, the speed of alkylation step c) will increase when the pH is lower.

In alkylation step c) of the process according to the invention, the mixture comprising the formaldehyde-enriched amino-aldehyde resin, the alcohol and the acid is brought to conditions whereby at least part of the alcohol reacts with the formaldehyde-enriched amino-aldehyde resin. Typical examples of such conditions are, besides the already given pH indications: a temperature lying between 50 °C and 110°C, and a pressure lying between 0.01 and 2 MPa. It can be beneficial to select temperature and pressure in the previous steps a) and b) such that these parameters do not need to be altered for step c).

In a preferred embodiment of the process according to the invention, the alkylation step c) is followed by a pH correction step d) in which the pH of the mixture is increased, to between 7 and 14. The advantage of implementing pH correction step d) is that the chance that self-condensation of the modified amino-formaldehyde resin according to the invention occurs is reduced or even eliminated. As a rule of thumb, the risk of self-condensation is (further) reduced with as the pH to which the mixture is brought is increased. Preferably, the pH of the mixture is brought to between 8 or 9 and 13.

Alkylation step c) is, optionally after implementing pH correction step d), preferably followed by isolation step e), in which the mixture is combined with a sufficient amount of water to let the modified amino-formaldehyde resin precipitate, followed by isolation of the solid modified amino-formaldehyde resin. The water preferably has a temperature between 0°C and 23°C, more preferably between 5°C and the T_{g} of the resin - that is, if the T_{g} of the resin lies above 5°C.

Since the modified amino-formaldehyde resin according to the invention is usually not soluble in water to any significant extent, the feeding of the mixture to water subsequent to step c) or d) will lead to its precipitation. In order to achieve said precipitation, a certain amount of water must be present. Typically, this amount will be at least as much as the total amount of alcohol added to the mixture in steps a) and/or c).

The precipitation of the modified amino-formaldehyde resin enables its separation from the mixture. The said separation can be carried out by any suitable means, by for example using a filter or a centrifuge. In a preferred embodiment according to the invention, the isolation step e) does not only comprise the said separation from the mixture but also - and subsequent to the separation - one, two, or more washing steps. In such a washing step, the modified amino-formaldehyde resin is brought into contact with a washing liquid. A suitable washing liquid is a liquid in which the modified amino-formaldehyde resin does not dissolve, and which is not an alcohol as used in any one of the preceding steps. Preferably, the washing liquid is miscible with the alcohols as used in previous steps in all ratios, thereby allowing complete removal of the said alcohols. In a preferred embodiment, the alcohol as used in previous process step c) is isopropanol and the washing liquid is water. The contacting of the modified amino-formaldehyde resin with the washing liquid is followed by its separation from the washing liquid. Preferably, the number of washing steps is limited to 5, more preferably 4. The advantage of the washing step is that the alcohol or alcohols as used in steps a) and/or c) are essentially removed from the modified amino-formaldehyde resin, thereby preventing undesirable physical and/or chemical side effects. An example of such an undesirable side effect is a T_{g} depressing effect, which could prevent obtaining the modified amino-formaldehyde resin according to the invention as powder.

It may also be useful to perform one or more precipitation steps on the modified amino-formaldehyde resin according to the invention. In a precipitation step, the resin is first dissolved in a suitable solvent such as for example acetone, followed by precipitation in preferably water. The advantage of a precipitation step is that the amount of any impurities can be reduced. In order to be able to execute the precipitation, it is desirable - also in general for all modified amino-formaldehyde resins according to the invention - that the resin is in ungelled form; this means that the resin can be dissolved in a suitable solvent or resin.

Following the separation step and washing and/or precipitation step or steps, it may be beneficial to dry the modified amino-formaldehyde resin, for example under vacuum and preferably at a temperature below its T_{g}, such as for example at about 30°C.

As indicated earlier, the invention relates to the above-described process for the preparation of a modified amino-formaldehyde resin, as well as to the modified amino-formaldehyde resin itself as obtainable by the said process. Closely interrelated with this, the invention also relates to a modified amino-formaldehyde resin, comprising a compound or a mixture of compounds according to formula (I): 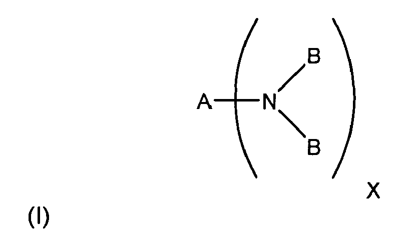 wherein:
- A is the core of an amino compound A-(-NH₂)ₓ;
- x is at least 2;
- B is H, CH₂OR¹, a group according to formula (III), or a group according to formula (IV), whereby:
   o R¹ is H or a group according to formula (II) wherein R², R³, R⁴, and R⁵ are H or a C₁-C₄ alkyl: 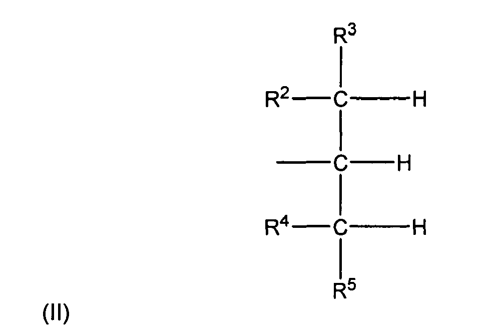
   o formula (III) is: 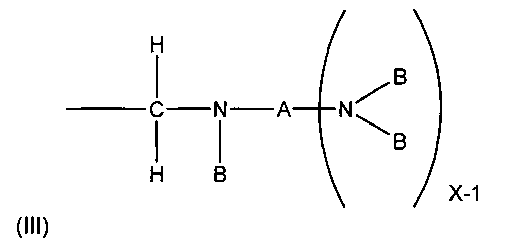
   o formula (IV) is: 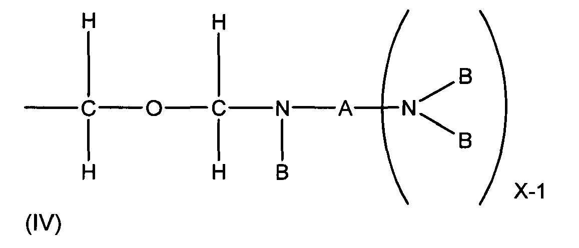
   whereby:
- at least 30% or 40%, preferably 50%, 60%, ore even 70% or 80% of all B groups are CH₂OR¹ in which R¹ is a group according to formula (II);
- the resin as a whole comprises at most 1.5 or 1.3, preferably at most 1.0, 0.8, 0.7 or even at most 0.6, 0.5 or 0.4 -NH groups per 'A' moiety, and
- the weight-average molecular weight of the resin lies between 500 and 10,000; preferably, the said weight-average molecular weight of the resin lies between 750 and 9,500, more preferably between 1,000 and 9,000.

In formula (I) above, A indicates the core of an amino compound A-(-NH₂)ₓ. A is thus that part of the chemical formula of an amino compound that remains when all -NH and -NH₂ groups are removed. Examples of suitable amino compounds A-(-NH₂)ₓ are melamine, urea, melam, and melem; preferably, the amino compound is melamine, urea of a mixture thereof. On the level of a molecule, x is an integer and should be at least 2 in order to enable resin formation. However, x can also be viewed from the point of view of the resin as a whole. Then, x is the averaged value over all amino compounds present in the resin and is then not an integer. In a preferred embodiment of this modified amino-formaldehyde resin according to the invention, A-(-NH₂)ₓ is melamine; x is 3; and R², R³, R⁴, and R⁵ are all H.

In order to obtain the modified amino-formaldehyde resin, comprising a compound or a mixture of compounds according to formula (I), the process according to the invention as disclosed above can be advantageously used. Care should be taken to ensure that the resin as a whole comprises at most 1.5 -NH group per 'A' moiety; this can be achieved for example by ensuring that F-binding step b) is executed during a sufficiently long time period or under optimised conditions of temperature or pH, and/or by ensuring that the molar F/(NH₂)₂ ratio of the mixture is sufficiently high. Care should also be taken to ensure that at least 30% of all B groups are CH₂OR¹ in which R¹ is a group according to formula (II); this can be achieved for example by ensuring that alkylation step c) executed during a sufficiently long time period or under optimised conditions of temperature or pH. Moreover, care should be taken to ensure that the weight-average molecular weight of the resin lies between 500 and 10,000; this can be achieved for example by choosing an adequate weight-average molecular weight of the amino-formaldehyde resin as used in step a).

A specific preferred embodiment of the invention relates to the compound (hexa(isopropoxymethyl)melamine) according to formula (I) wherein: A is the core of melamine; x is 3; B is CH₂OR¹; and R¹ is a group according to formula (II) whereby R², R³, R⁴, and R⁵ are all H. Furthermore, the invention relates to a process for the preparation of a hexa(alkoxymethyl)melamine, comprising:
i) a mixing step, in which a liquid phase, melamine and formaldehyde are brought together to form a reaction system, whereby the molar formaldehyde to (NH₂)₂ ratio (F/(NH₂)₂ ratio) is at least 4;
ii) a methylolation step, in which the reaction system is brought to conditions whereby formaldehyde reacts with the melamine to form a methylolated melamine;
iii) an alkylation step, in which an alcohol and an acid having a pKa lower than 6 are added to the reaction system, the reaction system then being brought to conditions whereby the alcohol reacts with the methylolated melamine to form the hexa(alkoxymethyl)melamine,
whereby the liquid phase comprises water and whereby steps i) and ii) may be executed either consecutively or simultaneously, wherein the alcohol is isopropanol and the hexa(alkoxymethyl)melamine is hexa(isopropoxymethyl)melamine.

This process according to the invention starts from molecular melamine, not from an amino-formaldehyde resin as in step a) of the process as disclosed above. It is important to ensure that the molar (F/(NH₂)₂ ratio) in step i) is at least 4; in this way, enough formaldehyde is present so that every -NH₂ group of the melamine molecules can in principle be converted into a -N(HCH₂OH)₂ and then later into a -N(CH₂OC(CH₃)₂H)₂ group. Preferably, however, an excess of formaldehyde is present in order to achieve the said conversion; the molar (F/(NH₂)₂ ratio) in step i) is thus preferably between 4 and 12, more preferably between 4.5 and 11.5 or between 5 or 5.5. or 6 and 11.0 or 10.5 or 10.

Preferably in this process according to the invention, the liquid phase in step i) comprises isopropanol and no alcohol is added to the reaction system in step iii). Furthermore, it is preferred that the alkylation step iii) is followed by a pH correction step in which the pH of the reaction system is increased, to between 7 and 14. Subsequent to this pH correction step, an isolation step in analogy of isolation step e) as disclosed above can be executed.

The invention furthermore also relates to the use of the modified amino-formaldehyde resin according to the invention as cross-linking agent in a coating composition, in particular in a powder coating composition. Consequently, the invention also relates to a coating composition, preferably a powder coating composition, comprising a modified amino-formaldehyde resin according to the invention; moreover, the invention also relates to a coating as obtainable.by curing of a coating composition according to the invention.

As is known, a coating composition typically comprises a coating resin, a cross-linking agent and optionally other compounds such as pigments, stabilizers, flowing agents and other compounds. The coating composition is then subsequently cured so as to obtain a coating. The modified amino-formaldehyde resin according to the invention may be used as sole cross-linking agent; typical amounts as used in coating compositions are 5 - 40 wt.%, preferably 10-30 wt.%. This has the advantage, in particular in powder coating compositions, that the amount as used is hardly or even not at all limited by considerations relating to the T_{g} such as is the case with HMMM and HBMM but rather can be chosen so as to obtain a desired (high) cross-linking result. The modified amino-formaldehyde resin according to the invention may also be used in combination with another cross-linking agent such as a limited amount of the aforementioned HMMM, HBMM or others.

Various aspects of the present invention will be illustrated by means of the following Example, without being limited thereto.

### Example I

### Preparation of a melamine-formaldehyde resin

A reactor was heated to 50°C; 99 gram of a 50.5 wt.% solution of formaldehyde (F) in water was put into the reactor. The pH was adjusted to 9.3 with sodium hydroxide. Then, 100 gram melamine and 74 gram water were added. The overall F/(NH₂)₂ ratio was 1.4. The reactor contents were brought to 50°C, and then heated further to 95°C so that the reaction to form a melamine-formaldehyde resin could start. The resin-forming reaction was continued until the cloud point at 20°C was reached. Then the resin was cooled to 70°C.

### Preparation of the formaldehyde-enriched amino-formaldehyde resin

To the resin, as cooled to 70°C, was slowly added 185 gram of a 50.5 wt.% solution of formaldehyde in water, having a pH 9.3. The addition of formaldehyde brought the overall molar F/(NH₂)₂ ratio to 4. Under the circumstances as described, the formaldehyde reacted almost immediately with the resin, whereby the formaldehyde-enriched amino-formaldehyde resin was formed. The reactor contents were subsequently cooled to 50°C; the contents were then removed from the reactor and allowed to cool further, whereby a solid matter was formed. The cooled formaldehyde-enriched amino-formaldehyde resin was left overnight, then subsequently milled to a powder.

### Preparation of the modified amino-formaldehyde resin

The milled formaldehyde-enriched amino-formaldehyde resin was washed twice with methanol, in order to dry the resin, followed with a drying step during two hours at 45°C under vacuum. This drying step is not essential according to the invention; it was done with a view on easy handling. A reactor was filled with 50 gram isopropanol, 20 gram of water, and 20 gram of the milled formaldehyde-enriched amino-formaldehyde resin under stirring. The contents were heated by placing the reactor in an oil batch of 95°C, and the pH was brought to 5.5 with HCl. At 82.3°C, an isopropanol/water vapour mixture started to boil off. As is known, water and isopropanol form an azeotropic mixture. The amount of fluid as boiled off was replenished with pure isopropanol; this was done as long as necessary to ensure that the amount of water in the vapour mixture was reduced to only 1 wt.%; this took 10 hours. During this time, in total 84.9 more grams of isopropanol than the amount of boiled-off vapour were added. The reactor contents were brought to a pH of 11.5 with 'dry' KOH (in this case, KOH in methanol). 104 gram of a mixture of modified amino-formaldehyde resin and isopropanol was obtained; this mixture was first filtered to remove any precipitated impurities such as salts, and then concentrated in a rotating film evaporator to 48 gram. The 48 grams were put in 250 ml of water, leading to precipitation. The solid product was filtered using a paper filter, then dissolved in 100 ml acetone. The clear solution was then put into about 250 ml water, leading to precipitation. The modified amino-formaldehyde resin was then collected through filtration.

### Evaluation

A differential scanning calorimetry (DSC) test was done on the modified amino-formaldehyde resin. The T_{g} was determined to be 42.3°C (mid-point DSC). The DSC measurement also enabled to determine the self-condensation temperature, at 151.5°C (onset) / 186°C (peak). These values prove that the modified amino-formaldehyde resin according to the invention had a much higher T_{g} than HMMM, and also that it is stable until relatively high temperatures; this enables a use under typical conditions in which cross-linkers in coatings, in particular powder coatings, are used. In for example powder coatings, it is common to mix all ingredients prior to the curing of the coating at temperatures of about 120°C.

## Claims

1. Process for the preparation of a modified amino-formaldehyde resin, comprising:
a) a mixing step, in which a liquid phase, an amino-formaldehyde resin and free formaldehyde are brought together to form a mixture, whereby the amino-formaldehyde resin has a molar formaldehyde to (NH₂)₂ ratio (F/(NH₂)₂ ratio) lying between 0.5 and 3, and whereby the overall molar F/(NH₂)₂ ratio in the mixture is higher than the molar F/(NH₂)₂ ratio of the amino-formaldehyde resin and lies between 2 and 6;
b) an F-binding step, in which the mixture is brought to conditions whereby at least part of the free formaldehyde reacts with the amino-formaldehyde resin to form a formaldehyde-enriched amino-formaldehyde resin;
c) an alkylation step, in which an alcohol and an acid having a pKa lower than 6 are added to the mixture, the mixture then being brought to conditions whereby at least part of the alcohol reacts with the formaldehyde-enriched amino-formaldehyde resin to form the modified amino-formaldehyde resin,
whereby steps a) and b) may be executed either consecutively or simultaneously.

2. Process according to claim 1, wherein step c) is followed by:
d) a pH correction step in which the pH of the mixture is increased, to between 7 and 14;
e) an isolation step, in which the mixture is combined with a sufficient amount of water to let the modified amino-formaldehyde resin precipitate, followed by isolation of the modified amino-formaldehyde resin.

3. Process according to claim 2, wherein isolation step e) comprises a separation step, in which the precipitated modified amino-formaldehyde resin is separated from the mixture, and a washing step, in which essentially all alcohol is removed from the modified amino-formaldehyde resin.

4. Process according to any one of claims 1 - 3, wherein the liquid phase comprises an alcohol and wherein in alkylation step c) no alcohol is added to the mixture.

5. Process according to any one of claims 1-4, wherein the alcohol as used in step a) and/or step c) comprises isopropanol.

6. Modified amino-formaldehyde resin, obtainable by the process of any one of claims 1 - 5.

7. Modified amino-formaldehyde resin, comprising a compound or a mixture of compounds according to formula (I): 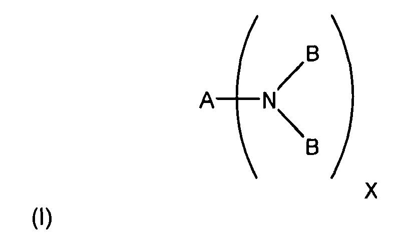 wherein:
• A is the core of an amino compound A-(-NH₂)ₓ;
• x is at least 2;
• B is H, CH₂OR¹, a group according to formula (III), or a group according to formula (IV), whereby:
o R¹ is H or a group according to formula (II) wherein R², R³, R⁴, and R⁵ are H or a C₁-C₄ alkyl: 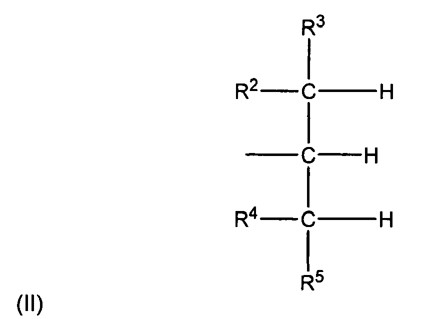
o formula (III) is: 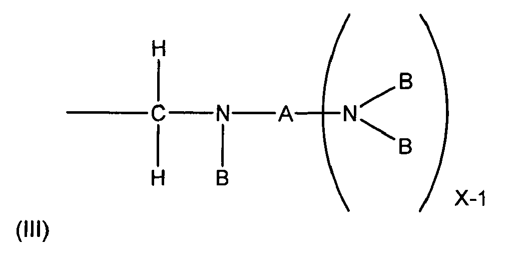
o formula (IV) is: 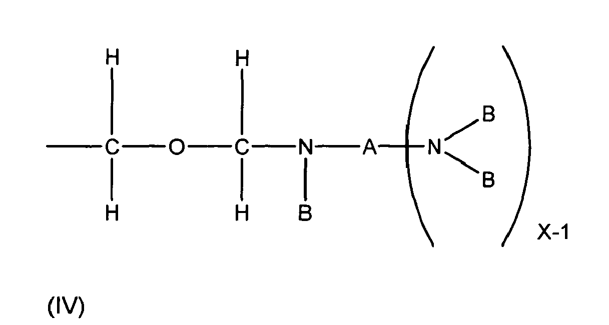
whereby:
• at least 50% of all B groups are CH₂OR¹ in which R¹ is a group according to formula (II);
• the resin as a whole comprises at most 1 -NH group per 'A' moiety, and
• the weight-average molecular weight of the resin lies between 500 and 10,000.

8. Modified amino-formaldehyde resin according to claim 7, wherein: A-(-NH₂)ₓ is melamine; x is 3; and R², R³, R⁴, and R⁵ are all H.

9. Compound (hexa(isopropoxymethyl)melamine) according to formula (I) wherein: A is the core of melamine; x is 3; B is CH₂OR¹; and R¹ is a group according to formula (II) whereby R², R³, R⁴, and R⁵ are all H.

10. Process for the preparation of a hexa(alkoxymethyl)melamine, comprising:
i) a mixing step, in which a liquid phase, melamine and formaldehyde are brought together to form a reaction system, whereby the molar formaldehyde to (NH₂)₂ ratio (F/(NH₂)₂ ratio) is at least 4;
ii) a methylolation step, in which the reaction system is brought to conditions whereby formaldehyde reacts with the melamine to form a methylolated melamine;
iii) an alkylation step, in which an alcohol and an acid having a pKa lower than 6 are added to the reaction system, the reaction system then being brought to conditions whereby the alcohol reacts with the methylolated melamine to form the hexa(alkoxymethyl)melamine,
whereby the liquid phase comprises water and whereby steps i) and ii) may be executed either consecutively or simultaneously, **characterised in that** the alcohol is isopropanol and the hexa(alkoxymethyl)melamine is hexa(isopropoxymethyl)melamine.

11. Process according to claim 10, wherein in step i) the liquid phase comprises isopropanol and wherein in step iii) no alcohol is added to the reaction system.

12. Process according to claim 10 or 11, wherein alkylation step iii) is followed by:
iv) a pH correction step in which the pH of the reaction system is increased, to between 7 and 14.

13. Use of the modified amino-formaldehyde resin according to any one of claims 6 - 9 as cross-linker in coatings.

14. Use of the modified amino-formaldehyde resin according to any one of claims 6 - 9 as cross-linker in powder coatings.

15. Coating composition, in particular a powder coating composition, comprising a modified amino-formaldehyde resin according to any one of claims 6-9.

16. Coating, obtainable by curing a coating composition according to claim 15.
